# EUROPÄISCHE PATENTSCHRIFT

(11) **EP 3 266 512 B1**
(45) Veröffentlichungstag und Bekanntmachung des Hinweises auf die Patenterteilung: **12.06.2019**
(21) Anmeldenummer: 16178520.9
(22) Anmeldetag: 08.07.2016
(51) Int. Cl.: B01D 53/32, H01M 8/00

(54) **VERFAHREN UND EINRICHTUNG ZUR ENERGIEERZEUGUNG AUS WASSERSTOFFREICHEM INDUSTRIE-ABGAS**
METHOD AND DEVICE FOR GENERATING POWER FROM A HYDROGEN-RICH INDUSTRY EXHAUST GAS
PROCEDE ET DISPOSITIF DE PRODUCTION D'ENERGIE A PARTIR DES GAZ INDUSTRIELS RICHES EN HYDROGENE

(43) Veröffentlichungstag der Anmeldung: 10.01.2018
(73) Patentinhaber: Fraunhofer-Gesellschaft zur Förderung der angewandten Forschung e.V., 80686 München (DE); KHK Epi Technologies GmbH, 85614 Kirchseeon (DE)
(72) Erfinder: STEINBERGER, Michael, 90409 Nürnberg (DE); ÖCHSNER, Richard, 90449 Nürnberg (DE); FREY, Lothar, 91315 Höchstadt (DE); KÖNIG, Karl-Heinz, 85614 Kirchseeon (DE)
(74) Vertreter: Gagel, Roland

(56) Entgegenhaltungen:
- EP-A1- 2 233 195
- DE-A1-102006 050 182
- US-A1- 2003 143 448
- US-A1- 2007 246 373

## Beschreibung

### Technisches Anwendungsgebiet

Die vorliegende Erfindung betrifft ein Verfahren zur Energieerzeugung aus wasserstoffreichem Industrie-Abgas, insbesondere aus Anlagen der Halbleiterfertigung und/oder Halbleiterprozessierung, das an einem Abgas-Ausgang einer Abgasanlage ausströmt. Die Erfindung betrifft auch eine Einrichtung zur Energieerzeugung aus wasserstoffreichem Industrie-Abgas.

Wasserstoffreiches Industrie-Abgas entsteht häufig bei Prozessen, die Wasserstoff als Trägergas verwenden. Beispiele sind Epitaxieanlagen oder andere Anlagen der Halbleiterfertigung oder Halbleiterprozessierung. Das wasserstroffreiche Abgas enthält bei diesen Anlagen neben Wasserstoff zusätzliche teils signifikante Fremdgasanteile sowie Kontaminationen in geringeren Mengen. Signifikante Gasanteile neben dem Wasserstoff können vorwiegend Stickstoff oder Argon sein, Kontaminationen werden beispielsweise durch Chlorwasserstoff (HCl), Chlorsilane und Kohlenwasserstoffe verursacht.

### Stand der Technik

Das wasserstoffreiche Industrie-Abgas wird bisher üblicherweise über so genannte Abatementsysteme (Abgasmanagementsysteme) sicher entsorgt. Dabei werden in einer oder mehreren Reinigungsstufen für die Umwelt kritische Gasanteile und Kontaminationen entfernt und das restliche Gasgemisch anschließend in die Atmosphäre entlassen. In einigen Systemen wird der im Abgas enthaltene Wasserstoff auch thermisch genutzt, beispielsweise in einem Brenner. In vielen Fällen wird der Wasserstoff bei den bekannten Verfahren jedoch nicht energetisch verwendet, so dass der Energieinhalt des Wasserstoffs ungenutzt bleibt.

Die EP 2233195 A1 zeigt ein System zur Rückgewinnung des Wasserstoffs aus Industrie-Abgas, mit dem der Wasserstoff aus dem Abgas abgetrennt und aufgereinigt wird. Der damit zurückgewonnene Wasserstoff wird dann wieder für eine Verwendung im zugrundeliegenden Prozess oder auch für andere Verwendungszwecke zur Verfügung gestellt. Allerdings erfordert dieses System einen hohen Aufwand für die Abtrennung und Reinigung des Wasserstoffs mittels unterschiedlicher Filtertechnologien sowie einen zusätzlichen Energieaufwand. Zudem muss die Reinheit des gereinigten Wasserstoffs stetig überwacht werden, um die Qualität der Prozesse, bei denen dieser Wasserstoff wiederverwendet wird, nicht zu gefährden. Gerade bei Epitaxieprozessen hat die Einhaltung der Gasqualität absolute Priorität. Die US20030143448 A1 offenbart die Nutzung von wasserstoffreichem Abgas durch eine Brennstoffzelle oder eine Gasturbine. Zwischen der Abgaserzeugenden Vorrichtung und der Brennstoffzelle bzw. Gasturbine ist ein Kompressor geschaltet.

Die Aufgabe der vorliegenden Erfindung besteht darin, ein Verfahren sowie eine Einrichtung anzugeben, die die Energieerzeugung aus wasserstoffreichem Industrie-Abgas ermöglichen und auch zur Verwertung des Abgases aus Anlagen der Halbleiterfertigung und/oder Halbleiterprozessierung, insbesondere aus Epitaxieanlagen, eingesetzt werden können.

### Darstellung der Erfindung

Die Aufgabe wird mit dem Verfahren und der Einrichtung gemäß den Patentansprüchen 1 und 10 gelöst. Vorteilhafte Ausgestaltungen des Verfahrens sowie der Einrichtung sind Gegenstand der abhängigen Patentansprüche oder lassen sich der nachfolgenden Beschreibung sowie den Ausführungsbeispielen entnehmen.

Bei dem vorgeschlagenen Verfahren wird das aus dem Ausgang einer Abgas-Anlage ausströmende Abgas durch eine Stromerzeugungs-Einrichtung mit wenigstens einem Kompressor und einer oder mehreren Brennstoffzellen geleitet, in der das Abgas zunächst komprimiert und anschließend aus wenigstens einem Teil des im Abgas enthaltenen Wasserstoffs in den Brennstoffzellen Strom erzeugt wird. Zur Kompression des Abgases ist der Kompressor mit dem Ausgang der Abgas-Anlage verbunden, wobei der Eingangsdruck des Kompressors beim Betrieb der Stromerzeugungs-Einrichtung auf einen Sollwert geregelt wird. In der Abgas-Anlage wird das Abgas vorzugsweise zunächst in einer oder mehreren Reinigungsstufen zumindest zum Teil von unerwünschten Bestandteilen befreit, so dass am Ausgang der Abgas-Anlage gereinigtes Abgas ausströmt. Derartige Reinigungsstufen sind Bestandteil bekannter Abatementsysteme, die in der Regel in den Industrie-Anlagen bereits eingebaut sind.

Die vorgeschlagene Einrichtung zur Energieerzeugung aus wasserstoffreichem Industrie-Abgas weist entsprechend einen mit einem Ausgang einer Abgasanlage verbindbaren Kompressor, in dem aus der Abgasanlage austretendes Abgas komprimierbar ist, eine oder mehrere Brennstoffzellen, in denen aus wenigstens einem Teil des im Abgas enthaltenen Wasserstoffs nach der Komprimierung des Abgases durch den Kompressor Strom erzeugbar ist, und eine Regeleinrichtung auf, mit der der Eingangsdruck des Kompressors während des Betriebs der Einrichtung auf einen Sollwert regelbar ist. Der Eingang des Kompressors wird dabei direkt mit dem Ausgang der Abgasanlage verbunden, so dass am Ausgang der Abgasanlage beim Betrieb der Einrichtung zur Energieerzeugung der entsprechende Solldruck vorliegt.

Mit dem vorgeschlagenen Verfahren und der zugehörigen Einrichtung ist es daher möglich, den in einem wasserstoffhaltigen Industrie-Abgas, beispielsweise dem Abgas einer Epitaxieanlage, enthaltenen Energiehalt des Wasserstoffs zumindest zum Teil in elektrische Nutzenergie zu wandeln. Damit wird die Ressourceneffizienz des Prozesses, beispielsweise eines Epitaxieprozesses, gesteigert und dadurch Ressourcen eingespart und die Umwelt geschont. Durch die Regelung des Eingangsdrucks des Kompressors wird eine druckbezogene Entkopplung des Abgasausgangs von der Verstromungseinrichtung erreicht. Dies ist für viele Prozessanlagen, wie beispielsweise Epitaxieanlagen oder andere Anlagen der Halbleitertechnologie und anderer technischer Gebiete, von großer Bedeutung, da bereits kleine Druckschwankungen am Abgasausgang eine direkte Rückwirkung auf den Prozesskammerdruck und damit den Prozess an sich haben können. Durch die Regelung des Eingangsdrucks des Kompressors, der durch Verbindung des Kompressors mit dem Abgasausgang dem Druck am Abgasausgang entspricht oder zumindest zu einem konstanten Druck am Abgasausgang führt, wird eine Rückwirkung auf den zugrundeliegenden Prozess verhindert, so dass sich das vorgeschlagene Verfahren und die zugehörige Einrichtung auch bei in dieser Hinsicht empfindlichen Anlagen der Halbleiterfertigung und/oder Halbleiterprozessierung vorteilhaft einsetzen lassen.

Der Eingangsdruck des Kompressors wird in einer Ausgestaltung des vorgeschlagenen Verfahrens bzw. der vorgeschlagenen Einrichtung über einen Bypass am Kompressor geregelt, über den ein durch die Regelung beispielsweise eines Ventils am Bypass einstellbarer bzw. veränderbarer Anteil des durch den Kompressor komprimierten Abgases an den Eingang des Kompressors rückführbar ist. Der Kompressor kann dabei mit konstanter Leistung, beispielsweise mit voller Leistung, betrieben werden.

In einer zweiten Ausgestaltung wird der Eingangsdruck des Kompressors mittels einer Drehzahlregelung des Kompressors geregelt. Dies entspricht einer Durchflussregelung des Abgases durch den Kompressor, die so erfolgt, dass der gewünschte Solldruck am Eingang des Kompressors aufrechterhalten wird. In beiden Ausgestaltungen wird vorzugsweise wenigstens ein Drucksensor zur Messung des Eingangsdrucks am Kompressor für die Regelung eingesetzt.

Bei dem vorgeschlagenen Verfahren und der zugehörigen Einrichtung erfolgt somit eine Rückverstromung und dadurch die energetische Nutzung des wasserstoffreichen Industrie-Abgases. Die eine oder mehreren Brennstoffzellen, beispielsweise in Form eines Brennstoffzellen-Stacks, können dabei im Flow-Through-Modus oder auch im Rezirkulations-Modus betrieben werden. Ein Betrieb im Flow-Through-Modus erfordert eventuell noch die Konditionierung des komprimierten Abgases vor dem Durchgang durch die Brennstoffzellen. In einer vorteilhaften Ausgestaltung des Verfahrens sowie der Einrichtung ist daher wenigstens eine Gaskonditionierungseinheit zwischen dem Ausgang des Kompressors und dem Eingang in die Brennstoffzellen angeordnet, durch die das komprimierte Abgas hinsichtlich Temperatur und/oder Feuchtegehalt für die jeweils eingesetzten Brennstoffzellen konditioniert wird. Die Konditionierung erfolgt dabei in Abhängigkeit der jeweils angesetzten Brennstoffzellen, beispielsweise auf eine relative Feuchte im Bereich zwischen 70% und 90% und eine Temperatur im Bereich zwischen 50° und 70°C.

Eine derartige Gaskonditionierungseinheit ist bei einem Rezirkulations-Betrieb der Brennstoffzellen aufgrund der Rezirkulation nicht erforderlich, da die Brennstoffzellen bei diesem Betrieb auch ohne Gaskonditionierung nicht austrocknen. Allerdings erfordert der Rezirkulation-Betrieb in der Regel einen sehr hohen Wasserstoffanteil von vorzugsweise deutlich über 95%. Bei wasserstoffreichem Abgas, das einen geringeren Wasserstoffanteil aufweist, ist daher bei diesem Betrieb eine Aufkonzentration des Wasserstoffs durch eine oder mehrere Filtereinheiten erforderlich, die zwischen dem Kompressor und dem Eingang der Brennstoffzellen angeordnet werden. Der Rezirkulations-Betrieb ist bei ausreichend hohem Wasserstoffanteil im Industrie-Abgas gegenüber dem Flow-Through-Modus vorzuziehen, da er eine effizientere Verwertung des Wasserstoffs ermöglicht und meist keine Gaskonditionierung erfordert.

Das Verfahren und die zugehörige Einrichtung ermöglichen die Nutzung beliebiger Brennstoffzellentechnologien, beispielsweise die Verwendung einer oder mehrerer PEM-Brennstoffzellen (Polymerelektrolytbrennstoffzellen). Die Reinigungsstufen sind vorzugsweise nicht Teil der vorliegenden Einrichtung, sondern sind in der Regel bereits in den jeweiligen Industrie-Abgasanlagen enthalten. Die Einrichtung wird daher direkt mit dem Abgasausgang dieser Anlagen verbunden. Die nach Durchgang durch die Brennstoffzellen verbleibenden Abgasbestandteile werden in die Atmosphäre abgegeben.

Das vorgeschlagene Verfahren und die vorgeschlagene Einrichtung lassen sich bei allen Industrieanlagen einsetzen, die ein entsprechend wasserstoffreiches Industrie-Abgas erzeugen. Unter einem wasserstoffreichem Industrie-Abgas wird dabei das Abgas einer Industrie-Anlage verstanden, das einen Wasserstoffanteil von vorzugsweise wenigstens 30% aufweist. Das Verfahren und die Einrichtung lassen sich vor allem bei Halbleiterprozessen, besonders vorteilhaft bei Epitaxieprozessen, einsetzen. Aber auch weitere Prozesse, welche wasserstoffhaltige Abgase erzeugen, wie beispielsweise in der Glas- oder Metallindustrie, sind mögliche Einsatzgebiete.

### Kurze Beschreibung der Zeichnungen

Das vorgeschlagene Verfahren und die zugehörige Einrichtung werden nachfolgend anhand von zwei Ausführungsbeispielen in Verbindung mit den Zeichnungen nochmals näher erläutert. Hierbei zeigen:
- Fig. 1: ein Beispiel für eine Systemtopologie gemäß der vorliegenden Erfindung, bei der die Brennstoffzellen im Flow-Through-Modus betrieben werden; und
- Fig. 2: ein Beispiel für eine Systemtopologie gemäß der vorliegenden Erfindung, bei dem die Brennstoffzellen im Rezirkulations-Modus betrieben werden.

### Wege zur Ausführung der Erfindung

Mit dem Verfahren und der Einrichtung der vorliegenden Erfindung wird ein Verwertungssystem vorgeschlagen, welches mittels der Verwendung einer oder mehrerer PEM-Brennstoffzellen oder anderer Brennstoffzellentechnologien die Rückverstromung des im wasserstoffhaltigen Abgas enthaltenen Wasserstoffs ermöglicht. Ein derartiges Verwertungssystem besteht mindestens aus einem Brennstoffzellensystem und den entsprechenden verfahrenstechnischen Bauteilen zur prozessseitigen Einbindung des Brennstoffzellensystems. Vorzugsweise umfasst das Verwertungssystem auch einen elektrischen Wandler zum Anschluss an ein elektrisches Netz. Das Verwertungssystem wird nach den Reinigungsstufen eines Abatementsystems an den Abgasausgang der entsprechenden Anlage angeschlossen. Dadurch wird sichergestellt, dass giftige und sowohl für die Umwelt als auch die Brennstoffzelle schädliche Stoffe wie beispielsweise Chlorwasserstoff oder Chlorsilane unterhalb eines definierten Grenzwertes liegen. Unkritische Abgasbestandteile wie Wasserstoff, Stickstoff oder Argon werden in Abatementsystemen nicht herausgefiltert und liegen somit als resultierendes (gereinigtes) Gasgemisch am Ausgang der Reinigungsstufen eines Abatementsystems vor. Da der Ausgang des Abatementsystems für gewöhnlich direkt in die Abluft bzw. direkt in die Atmosphäre abgeleitet wird, liegt dieser Ausgang in etwa auf Umgebungsdruckniveau. Der Wasserstoffmengenanteil in dem gereinigten Gasgemisch beträgt dabei üblicherweise zwischen 50% und 98% (für marktübliche Si-Epitaxieprozesse). Für die Rückverstromung dieses wasserstoffhaltigen Gasgemisches auf niedrigem Druckniveau in einem PEM-Brennstoffzellensystem werden im Folgenden zwei Beispiele mit unterschiedlichen Topologien beschrieben.

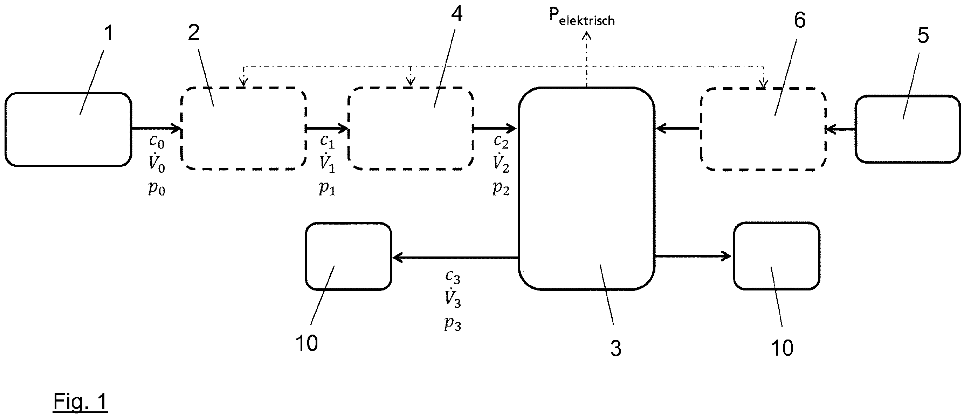

Figur 1 zeigt hierzu ein erstes Beispiel für eine Systemtopologie, bei der das Brennstoffzellensystem im so genannten Flow-Through-Modus betrieben wird. Dafür wird dem Brennstoffzellenstack 3 auf der Anodenseite eine überstöchiometrische Menge an Wasserstoff zugeführt. Die in den Brennstoffzellenstack 3 einfließende Wasserstoffmenge setzt sich dabei aus dem Wasserstoffmengenanteil C₂ und dem Volumenstrom *V̇*₂ zusammen. Das aus der wasserstoffhaltigen Abgasquelle 1 ausströmende, noch in der Abgasquelle von unerwünschten Stoffen gereinigte Abgas wird dabei zunächst im Membrankompressor 2 von einem Ausgangsdruck p₀ auf einen erhöhten Druck p₁ komprimiert, um einen Stackeingangsdruck p₂ von beispielsweise etwa 1,4*10⁵ Pa absolut zu erreichen. Der Ausgangsdruck p₀ entspricht hier dem Eingangsdruck in den Membrankompressor 2, der über eine in der Figur nicht dargestellte Regelung in diesem Beispiel auf einen konstanten Sollwert von beispielsweise 1*10⁵ Pa geregelt wird.

Im vorliegenden Beispiel wird nach der Kompression eine Konditionierung des in den Brennstoffzellenstack 3 einfließenden Gasstromes hinsichtlich Feuchte und Temperatur durchgeführt. Dies erfolgt mittels einer Gaskonditionierungseinheit 4, beispielsweise mittels eines Membranbefeuchters. Die jeweiligen Konzentrationen c₀ bis c₃, Volumenströme ***V̇*₀** bis ***V̇***₃ sowie Drücke p₀ bis p₃ an den unterschiedlichen Übergängen zwischen den einzelnen Komponenten des dargestellten Systems sind in der Figur angedeutet. Zusammen mit dem auf der Kathodenseite des Brennstoffzellenstacks 3 zugeführten (Luft-)Sauerstoff 5 wird die im Wasserstoff enthaltene Energiemenge im Brennstoffzellenstack 3 in elektrische und thermische Energie gewandelt. Abzüglich der intern erforderlichen Versorgungsverluste für die elektrische Versorgung des Membrankompressors 2, der Gaskonditionierungseinheit 4 und der Kathodenversorgung 6 resultiert die nutzbare elektrische Leistung P_{elektrisch}. Die nach der Energiewandlung noch verbleibenden Abgasbestandteile werden als Abluft 10 in die Atmosphäre entlassen.

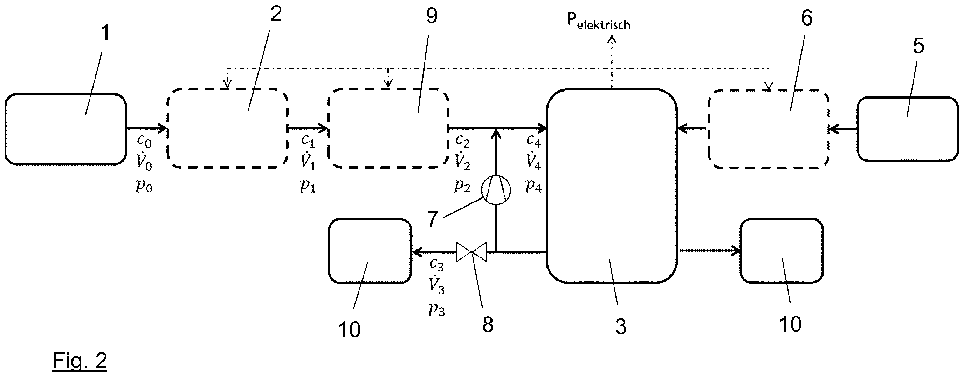

Figur 2 zeigt ein Beispiel für eine Systemtopologie gemäß der vorliegenden Erfindung, bei der das Brennstoffzellensystem im Rezirkulations-Modus betrieben wird. Im Unterschied zur Systemtopologie der Figur 1 wird hier der am Brennstoffzellenstack 3 ausfließende Volumenstrom mittels eines Rezirkulationsgebläses 7 wieder zurück zum Stackeingang gefördert und somit eine überstöchiometrische Wasserstoffversorgung der Anode des Brennstoffzellenstacks 3 ermöglicht. Der im einfließenden Volumenstrom enthaltene Fremdgasanteil (1-c₂) führt dazu, dass sich der Wasserstoffmengenanteil am Eingang c₄ in den Brennstoffzellenstack 3 stetig verringert. Um eine Unterversorgung des Brennstoffzellenstacks 3 mit Wasserstoff zu verhindern, muss in zyklischen Abständen das Purgeventil 8 kurzzeitig geöffnet werden, um die Restgase als Abluft 10 in die Atmosphäre zu entlassen. Auch hier wird das aus der wasserstoffhaltigen Abgasquelle 1 ausströmende gereinigte Abgas zunächst mittels des Kompressors 2 auf einen erhöhten Druck p₁ komprimiert, um einen Stackeingangsdruck p₂ von beispielsweise ca. 1,4*10⁵ Pa absolut zu erreichen. Der Eingangsdruck in den Kompressor 2, der hier dem Ausgangsdruck p₀ der wasserstoffhaltigen Abgasquelle entspricht, wird in diesem Beispiel wiederum auf einen konstanten Sollwert von beispielsweise 1*10⁵ Pa geregelt.

In der vorliegenden Ausgestaltung ist je nach Bedingung am Ausgang der Abgasquelle 1 bzw. nach der Kompression eine Filterung erforderlich, beispielsweise mittels des Membranfilters 9, um den einfließenden Wasserstoffmengenanteil c₂ zu erhöhen, beispielsweise auf mindestens 95%. Die jeweiligen Konzentrationen c₀ bis c₄, Volumenströme ***V̇*₀** bis ***V̇*₄** sowie Drücke p₀ bis p₄ an den unterschiedlichen Übergängen zwischen den einzelnen Komponenten des dargestellten Systems sind auch in dieser Figur angedeutet. Zusammen mit dem auf der Kathodenseite des Brennstoffzellenstacks 3 zugeführten (Luft-) Sauerstoff 5 wird die im Wasserstoff enthaltene Energiemenge in elektrische und thermische Energie gewandelt. Abzüglich der intern erforderlichen Versorgungsverluste - hier für die elektrische Versorgung des Membrankompressors 2, der Filtereinheit 9 und der Kathodenversorgung 6 - resultiert die nutzbare elektrische Leistung P_{elektrisch}.

### Bezugszeichenliste

- 1: wasserstoffhaltige Abgasquelle
- 2: Membrankompressor
- 3: Brennstoffzellenstack
- 4: Gaskonditionierungseinheit
- 5: (Luft-)Sauerstoff
- 6: Kathodenversorgung
- 7: Rezirkulationsgebläse
- 8: Purgeventil
- 9: Membranfilter
- 10: Abluft

## Patentansprüche

1. Verfahren zur Energieerzeugung aus wasserstoffreichem Industrie-Abgas, insbesondere aus Anlagen der Halbleiterfertigung und/oder Halbleiterprozessierung, das an einem Abgas-Ausgang einer Abgasanlage ausströmt, bei dem
das Abgas durch eine Stromerzeugungs-Einrichtung mit wenigstens einem Kompressor (2) und einer oder mehreren Brennstoffzellen (3) geleitet wird, in der das Abgas komprimiert und aus wenigstens einem Teil des im Abgas enthaltenen Wasserstoffs Strom erzeugt wird,
wobei der Kompressor (2) mit dem Abgas-Ausgang der Abgasanlage verbunden ist **dadurch gekennzeichnet, dass** ein Eingangsdruck des Kompressors (2) auf einen Sollwert geregelt wird.

2. Verfahren nach Anspruch 1,
**dadurch gekennzeichnet,**
**dass** der Eingangsdruck des Kompressors (2) über einen Bypass am Kompressor (2) geregelt wird, über den ein variabler Anteil des durch den Kompressor (2) komprimierten Abgases an einen Eingang des Kompressors rückführbar ist.

3. Verfahren nach Anspruch 1,
**dadurch gekennzeichnet,**
**dass** der Eingangsdruck des Kompressors (2) mittels einer Drehzahlregelung des Kompressors (2) geregelt wird.

4. Verfahren nach einem der Ansprüche 1 bis 3,
**dadurch gekennzeichnet,**
**dass** die eine oder die mehreren Brennstoffzellen (3) in einem Flow-Through-Modus betrieben werden.

5. Verfahren nach Anspruch 4,
**dadurch gekennzeichnet,**
**dass** das Abgas vor einem Durchgang durch die eine oder mehreren Brennstoffzellen (3) in einer Gaskonditionierungseinheit (4) der Stromerzeugungs-Einrichtung hinsichtlich Temperatur und/oder Feuchtegehalt für die eine oder mehreren Brennstoffzellen (3) konditioniert wird.

6. Verfahren nach einem der Ansprüche 1 bis 3,
**dadurch gekennzeichnet,**
**dass** die eine oder die mehreren Brennstoffzellen (3) in einem Rezirkulations-Modus betrieben werden.

7. Verfahren nach Anspruch 6,
**dadurch gekennzeichnet,**
**dass** das Abgas vor einem Durchgang durch die eine oder mehreren Brennstoffzellen (3) in wenigstens einer Filtereinheit (9) der Stromerzeugungs-Einrichtung gefiltert wird, um einen Anteil des im Abgas enthaltenen Wasserstoffs zu erhöhen.

8. Verfahren nach einem der Ansprüche 1 bis 7,
**dadurch gekennzeichnet,**
**dass** das Abgas vor einem Durchgang durch den Kompressor und/oder die eine oder mehreren Brennstoffzellen (3) in einer oder mehreren Reinigungsstufen zumindest zum Teil von unerwünschten Bestandteilen befreit wird.

9. Verfahren nach Anspruch 8,
**dadurch gekennzeichnet,**
**dass** das Abgas in der einen oder den mehreren Reinigungsstufen zumindest zum Teil von Stoffen als unerwünschten Bestandteilen befreit wird, die für die Umwelt und die eingesetzten Brennstoffzellen (3) schädlich sind.

10. Einrichtung zur Stromerzeugung aus wasserstoffreichem Industrie-Abgas, insbesondere aus Anlagen der Halbleiterfertigung und/oder Halbleiterprozessierung, die wenigstens
- einen mit einem Ausgang einer Abgasanlage verbindbaren Kompressor (2), in dem aus der Abgasanlage austretendes Abgas komprimierbar ist, und
- eine oder mehrere Brennstoffzellen (3) aufweist, in denen aus wenigstens einem Teil des im Abgas enthaltenen Wasserstoffs nach einer Komprimierung des Abgases durch den Kompressor (2) Strom erzeugbar ist, **gekennzeichnet durch** eine Regeleinrichtung, mit der ein Eingangsdruck des Kompressors (2) auf einen Sollwert regelbar ist.

11. Einrichtung nach Anspruch 10,
**dadurch gekennzeichnet,**
**dass** die Regeleinrichtung einen Bypass am Kompressor (2) regelt, über den ein variabler Anteil des durch den Kompressor (2) komprimierten Abgases an einen Eingang des Kompressors (2) rückführbar ist.

12. Einrichtung nach Anspruch 10,
**dadurch gekennzeichnet,**
**dass** die Regeleinrichtung eine Drehzahl des Kompressors (2) regelt.

13. Einrichtung nach einem der Ansprüche 10 bis 12,
**dadurch gekennzeichnet,**
**dass** sie für einen Betrieb der einen oder mehreren Brennstoffzellen (3) in einem Flow-Through-Modus ausgebildet ist.

14. Einrichtung nach Anspruch 13,
**dadurch gekennzeichnet,**
**dass** sie eine Gaskonditionierungseinheit (4) aufweist, in der das Abgas vor einem Durchgang durch die eine oder mehreren Brennstoffzellen (3) hinsichtlich Temperatur und/oder Feuchtegehalt für die eine oder mehreren Brennstoffzellen (3) konditioniert wird.

15. Einrichtung nach einem der Ansprüche 10 bis 12,
**dadurch gekennzeichnet,**
**dass** sie für einen Betrieb der einen oder mehreren Brennstoffzellen (3) in einem Rezirkulations-Modus ausgebildet ist.

16. Einrichtung nach Anspruch 15,
**dadurch gekennzeichnet,**
**dass** sie wenigstens einer Filtereinheit (9) aufweist, in der ein Anteil des im Abgas enthaltenen Wasserstoffs vor einem Durchgang durch die eine oder mehreren Brennstoffzellen (3) aufkonzentriert wird.

17. Einrichtung nach einem der Ansprüche 10 bis 16,
**dadurch gekennzeichnet,**
**dass** die eine oder mehreren Brennstoffzellen (3) PEM-Brennstoffzellen sind.

## Claims

1. Method for generating energy from hydrogen-rich industrial exhaust gas, particularly coming from semiconductor production facilities and/or semiconductor processing facilities, which escapes at an exhaust gas outlet of an exhaust system, in which the exhaust gas is passed through a electricity generation device having at least one compressor (2) and one or more fuel cells (3), in which the exhaust gas is compressed and electricity is generated from at least a portion of the hydrogen contained in the exhaust gas, wherein the compressor (2) is connected to the exhaust gas outlet of the exhaust system, **characterized in that** an inlet pressure of the compressor (2) is regulated to a setpoint value.

2. Method according to Claim 1, **characterized in that** the inlet pressure of the compressor (2) is regulated via a bypass on the compressor (2), by means of which a variable portion of the exhaust gas compressed by the compressor (2) can be returned to an inlet of the compressor.

3. Method according to Claim 1, **characterized in that** the inlet pressure of the compressor (2) is regulated by means of a speed control of the compressor (2).

4. Method according to any one of Claims 1 to 3, **characterized in that** the one or more fuel cells (3) is/are operated in a flow-through mode.

5. Method according to Claim 4, **characterized in that** before passing through the one or more fuel cells (3), the exhaust gas is conditioned in a gas conditioning unit (4) of the electricity generating device in terms of temperature and/or moisture content for the one or more fuel cells (3).

6. Method according to any one of Claims 1 to 3, **characterized in that** the one or more fuel cells (3) is/are operated in a recirculation mode.

7. Method according to Claim 6, **characterized in that** the exhaust gas is filtered in at least one filter unit (9) of the electricity generating device before passing through the one or more fuel cells (3) in order to increase a proportion of the hydrogen contained in the exhaust gas.

8. Method according to any one of Claims 1 to 7, **characterized in that** undesirable constituents are at least partly removed from the exhaust gas in one or more purification stages before it passes through the compressor and/or the one or more fuel cells (3).

9. Method according to Claim 8, **characterized in that** constituents which are harmful to the environment and to the fuel cells used (3) are at least partly removed from the exhaust gas as undesirable constituents in the one or more purification stages.

10. Device for generating energy from hydrogen-rich industrial exhaust gas, particularly coming from semiconductor production facilities and/or semiconductor processing facilities, having at least
- a compressor (2) which is connectable to the outlet of an exhaust system, in which gas exiting the exhaust system is compressible, and
- one or more fuel cells (3) in which electricity can be generated from at least some of the hydrogen contained in the exhaust gas following a compression of the exhaust gas by the compressor (2),
**characterized by**
- a regulating device with which an inlet pressure of the compressor (2) is regulable to a setpoint value.

11. Device according to Claim 10, **characterized in that** the regulating device controls a bypass on the compressor (2), through which a variable proportion of the exhaust gas compressed by the compressor (2) can be returned to an inlet of the compressor (2).

12. Device according to Claim 10, **characterized in that** the regulating device controls a rotating speed of the compressor (2).

13. Device according to any one of Claims 10 to 12, **characterized in that** it is designed for operation of the one or more fuel cells (3) in a flow-through mode.

14. Device according to Claim 13, **characterized in that** it includes a gas conditioning unit (4), in which the exhaust gas is conditioned before passing through the one or more fuel cells (3) in terms of temperature and/or moisture content for the one or more fuel cells (3) .

15. Device according to any one of Claims 10 to 12, **characterized in that** it is designed for operation of the one or more fuel cells (3) in a recirculation mode.

16. Device according to Claim 15, **characterized in that** it includes at least one filter unit (9), in which a portion of the hydrogen contained in the exhaust gas is concentrated before a pass through the one or more fuel cells (3).

17. Device according to any one of Claims 10 to 16, **characterized in that** the one or more fuel cells (3) is/are PEM fuel cells.

## Revendications

1. Procédé de génération d'énergie à partir des gaz résiduels industriels riches en hydrogène, notamment provenant des installations de fabrication de semi-conducteurs et/ou de traitement de semi-conducteurs, qui s'écoulent à une sortie de gaz résiduels d'une installation de gaz résiduels, dans lequel le gaz d'échappement est guidé par un dispositif de génération électrique comportant au moins un compresseur (2) et une ou plusieurs piles à combustible (3), dans lequel le gaz résiduel est compressé et du courant est généré à partir d'au moins une partie de l'hydrogène contenu dans le gaz résiduel, moyennant quoi le compresseur (2) est relié à la sortie de gaz résiduel de l'installation de gaz résiduel, **caractérisé en ce que** une pression d'entrée du compresseur (2) est réglée sur une valeur de consigne.

2. Procédé selon la revendication 1, **caractérisé en ce que** la pression d'entrée du compresseur (2) est réglée par l'intermédiaire d'une dérivation sur le compresseur (2), par l'intermédiaire de laquelle une fraction variable du gaz résiduel compressé par le compresseur (2) peut être réalimentée à une entrée du compresseur.

3. Procédé selon la revendication 1, **caractérisé en ce que** la pression d'entrée du compresseur (2) est réglée au moyen d'une régulation de vitesse de rotation du compresseur (2).

4. Procédé selon une des revendications 1 à 3, **caractérisé en ce que** une ou plusieurs piles à combustible (3) sont mises en fonctionnement dans un mode flow-through.

5. Procédé selon la revendication 4, **caractérisé en ce que** le gaz résiduel est conditionné avant un passage à travers une ou plusieurs piles à combustible (3) dans une unité de conditionnement de gaz (4) du dispositif de génération d'électricité en ce qui concerne la température et/ou la teneur en humidité pour une ou plusieurs piles à combustible (3).

6. Procédé selon une des revendications 1 à 3, **caractérisé en ce que** une ou plusieurs piles à combustible (3) sont mises en fonctionnement dans un mode de recirculation.

7. Procédé selon la revendication 6, **caractérisé en ce que** le gaz résiduel est filtré avant un passage à travers une ou plusieurs piles à combustible (3) dans moins une unité de filtre (9) du dispositif de génération d'électricité, afin d'augmenter une fraction de l'hydrogène contenu dans le gaz résiduel.

8. Procédé selon une des revendications 1 à 7, **caractérisé en ce que** le gaz résiduel avant un passage à travers le compresseur et/ou une ou plusieurs piles à combustible (3) est débarrassé au moins partiellement des composants indésirables dans un ou plusieurs un étages de purification.

9. Procédé selon la revendication 8, **caractérisé en ce que** le gaz résiduel est débarrassé dans un ou plusieurs étages de purification au moins partiellement des matières telles que des composants indésirables, qui sont nuisibles pour l'environnement et les piles à combustible (3) utilisées.

10. Dispositif de génération d'électricité à partir des gaz résiduels industriels riches en d'hydrogène, notamment provenant des installations de fabrication de semi-conducteurs et/ou de traitement des semi-conducteurs, qui présente au moins
- un compresseur (2) pouvant être relié à une sortie d'une installation de gaz résiduel, dans lequel le gaz résiduel sortant de l'installation de gaz résiduel peut être compressé et
- une ou plusieurs piles à combustible (3), dans lequel à partir d'au moins une partie de l'hydrogène contenu dans le gaz résiduel de l'électricité peut être générée après une compression du gaz résiduel par le compresseur (2), **caractérisé par**
- un dispositif de réglage, avec lequel une pression d'entrée du compresseur (2) peut être réglée sur une valeur de consigne.

11. Dispositif selon la revendication 10, **caractérisé en ce que** le dispositif de réglage règle une dérivation sur le compresseur (2), par l'intermédiaire de laquelle une fraction variable du gaz résiduel compressé par le compresseur (2) peut être réalimentée à une entrée du compresseur (2).

12. Dispositif selon la revendication 10, **caractérisé en ce que** le dispositif de réglage règle une vitesse de rotation du compresseur (2).

13. Dispositif selon une des revendications 10 à 12, **caractérisé en ce que** il est configuré pour un fonctionnement du une ou plusieurs piles à combustible (3) dans un mode flow-through.

14. Dispositif selon la revendication 13, **caractérisée en ce qu'**il présente une unité de conditionnement de gaz (4), dans laquelle le gaz résiduel est conditionné avant un passage à travers une ou plusieurs piles à combustible (3) en ce qui concerne la température et/ou la teneur en humidité pour une ou plusieurs piles à combustible (3).

15. Dispositif selon une des revendications 10 à 12, **caractérisé en ce que** il est conçu pour un fonctionnement d'une ou plusieurs piles à combustible (3) dans un mode de recirculation.

16. Dispositif selon la revendication 15, **caractérisé en ce que** il présente au moins une unité de filtre (9), dans laquelle une fraction de l'hydrogène contenu dans le gaz résiduel concentré avant un passage à travers une ou plusieurs piles à combustible (3).

17. Dispositif selon une des revendications 10 à 16, **caractérisée en ce que** une ou plusieurs piles à combustible (3) sont des piles à combustible PEM.
